# EUROPEAN PATENT APPLICATION

(11) **EP 4 588 387 A1**
(43) Date of publication of application: **23.07.2025**
(21) Application number: 25150389.2
(22) Date of filing: 07.01.2025
(51) Int. Cl.: A42B 3/04

(54) **SIDE SHROUD ASSEMBLY FOR HELMET WITH MODULAR ACCESSORY INTERFACE**

(30) Priority: 21.01.2024 US 202463623307 P
(71) Applicant: Wilcox Industries Corp., Newington, NH 03801 (US)
(72) Inventor: Teetzel, James W., Newington, NH 03801 (US); Turner, Elliott S., Newington, NH 03801 (US)
(74) Representative: FRKelly

(57) **Abstract**

A helmet side shroud assembly is provided having a modular interface which is configured to mechanically and electrically couple an accessory or peripheral device module. In embodiments, the side shroud assembly is a component or connection point of a larger helmet mount accessory platform which provides power, centralized control, and communication between attached devices. In embodiments, the specifications of the modular interface are governed or controlled by an interface control document (ICD). In embodiments, the shroud assembly includes a dedicated interface in addition to the modular interface.

## Description

### CROSS REFERENCE TO RELATED APPLICATION

This application claims the priority benefit of U.S. provisional application no. 63/623,307 filed January 21, 2024. The aforementioned application is incorporated herein by reference in its entirety.

### BACKGROUND

The present disclosure relates to helmet accessory mounts and, more particularly to a helmet side or over-ear shroud assembly having a modular interface which is configured to mechanically and electrically couple an accessory or peripheral device module. In embodiments, the shroud is a component or connection point of a larger helmet mount accessory platform which provides power, centralized control, and communication between attached devices.

In embodiments, the specifications of the modular interface are governed or controlled by an interface control document (ICD). The ICD is, in effect, a rulebook or standardization blueprint that sets forth the parameters and requirements that developers must adhere to in order to ensure that an accessory device module functions as intended with respect to the shroud and, in certain embodiments, within the larger helmet mount accessory platform of which the side shroud assembly is a component and other attached peripheral devices. In embodiments, the shroud assembly includes a dedicated interface in addition to the modular interface.

One advantage of the present development is that the modular interface increases the expandability and upgradability of the helmet mount accessory platform, particularly as especially as new technology comes out.

Another advantage of the present development is the expanded functionality that such additional accessory device modules provide.

Yet another advantage of the present development is the enhanced ability to configure or customize the helmet system to meet mission-specific requirements.

Still further advantages and benefits will be apparent to persons skilled in the art upon a reading and understanding of the present disclosure.

Still further advantages and benefits of the present invention will become apparent to those of ordinary skill in the art upon reading and understanding the following detailed description of the preferred embodiments.

### SUMMARY

A modular side shroud assembly for a helmet mounting system associated with a helmet includes a main housing configured to be detachably mounted to a side portion of the helmet. The main housing has a rear end positioned toward a rear portion of the helmet when mounted and a forward end positioned toward a front portion of the helmet when mounted. Shroud circuitry is disposed within the main housing and is configured for electrical coupling to the helmet mounting system when mounted. A modular interface portion is disposed on the forward end of the housing, the modular interface being configured in accordance with an associated interface control document (ICD) to detachably couple an accessory device that conforms to the ICD to the modular side shroud assembly and to electrically couple the accessory device to the shroud circuitry.

In a more limited aspect, the modular interface is configured to interchangeably couple a plurality of modular and interchangeable accessory devices to the modular side shroud assembly, wherein the modular side shroud assembly comprises an electrical connector disposed within the modular interface portion for electrically coupling the plurality of modular and interchangeable accessory devices to the shroud circuitry.

In another more limited aspect, the modular interface portion includes a base panel having a base plate portion and an upstanding raised edge portion, wherein one or more physical and functional features defined by the ICD are defined by the base panel. The base plate includes a first aperture receiving an electrical connector electrically coupled to the shroud circuitry and a raised edge portion defining a recess on a first side thereof and cutout defined on a second side thereof opposite the first side. The recess is configured to receive a tab or tongue disposed at a proximal end of the accessory module and the cutout is configured to engage a complementary shoulder formed on the main housing.

In another more limited aspect, the base plate is secured to the main housing via a plurality of threaded fasteners passing through respective aligned clearance openings in the main housing and threadably engaging respective aligned mounting bosses formed on the base plate.

In another more limited aspect, the base plate includes one or more ribs configured to engage respective one or more recesses formed on a mating surface of the accessory module, the one or more ribs and one or more recesses configured to serve as alignment features to ensure proper alignment of the accessory module within the modular interface portion when the accessory module is attached.

In another more limited aspect, the modular side shroud assembly further includes a clearance bevel formed on each of the one or more ribs, the clearance bevel configured to accommodate rotational insertion of the accessory module into the modular interface portion.

In another more limited aspect, the modular side shroud assembly further includes an electrical interface disposed within a first opening formed in the base plate.

In another more limited aspect, the modular side shroud assembly further includes a quick release latching assembly for detachably securing the modular accessory to the modular interface portion.

In another more limited aspect, the quick release latching assembly includes a sliding plate slidably disposed intermediate the base plate and a recessed surface formed in the main housing within the modular interface portion. The sliding plate is slidable in an axial direction. An opening is formed in the sliding plate and a release handle is coupled to the sliding plate and protrudes beyond the main housing to allow for manual release of the latching assembly by the user for removing the accessory module when the accessory module is attached. One or more spring elements are received within a corresponding one or more channels disposed within the recessed surface and within a respective one or more notches formed on the sliding plate, the one or more notches defining a respective one or more arms extending in a transverse direction. The one or more spring elements each have one end bearing against a surface within the housing and another end bearing against a respective one of the one or more arms to bias the sliding plate toward a latched axial position. A central recess formed in the recessed surface aligns with a second opening formed in the base plate. The one or more spring members are configured to urge the second opening in the sliding plate out of alignment with the first opening and the central recess. The sliding plate is manually slidable to bring the second opening in the sliding plate into alignment with the first opening and the central recess.

In another more limited aspect, the quick release latching assembly includes a latched key rigidly secured to the accessory module, the latched key including a threaded end which threadably engages a complementary opening within the accessory module and a post which extends from a housing of the accessory module. An enlarged diameter head is disposed at a distal end of the post.

In another more limited aspect, the enlarged diameter head includes a tool-engaging feature.

In another more limited aspect, the enlarged diameter head has a beveled and/or rounded edge.

In another more limited aspect, the opening in the sliding plate is elongated in the axial direction a sufficient distance to provide a clearance to accommodate a rotational path of the latched key as it enters the opening in the sliding plate.

In another more limited aspect, the rear end of the housing is configured to operably couple to a rear bridge interface of the helmet mounting system.

In another more limited aspect, the modular side shroud assembly further includes a headset interface intermediate the rear end and forward end for detachably coupling a communications headset.

In another more limited aspect, the headset interface includes a bayonet mount for detachably coupling the communications headset.

In another more limited aspect, the modular side shroud assembly further includes a second side shroud assembly in communication with the modular side shroud assembly. The second side shroud assembly includes one or more programmable switches configured to control the accessory module when the accessory module is attached to the modular side shroud assembly.

In another more limited aspect, the modular side shroud assembly further includes a second side shroud assembly in communication with the modular side shroud assembly. A first headset assembly is coupled to the modular side shroud assembly and a second headset assembly is coupled to the second side shroud assembly, the first and second headset assemblies cooperating to define a binaural headset.

In another more limited aspect, a combination of the modular side shroud assembly as described herein and an accessory device is provided, wherein the accessory device has user-depressible push button configured to control operation or one or more functions of the accessory device.

In another more limited aspect, the accessory device is a video recording system having a manual record button, the video recording system selected from a camera recording system having an integral camera and configured to record a video signal captured by the integral camera and a digital video recorder configured to record a video signal received from an external source selected from the group consisting of an external camera and an external video feed.

In another more limited aspect, the accessory device is one or more devices selected from the group consisting of cameras, thermal cameras, light detection and ranging

(LiDAR) scanners, directional antennas, range finders, laser designators, infrared (IR) illuminators, flashlights, sensors, sensor suites, barometers, accelerometers, gyroscopes, magnetometers, satellite-based positioning receivers, temperature sensors, light sensors, microphones, two-way radios, music players, controllers, actuators, button pads, keypads, self-defense modules, lachrymator canister modules, conducted electrical weapon modules, and projectile weapon modules.

In another more limited aspect, the accessory device is configured to be one or both of programmable with an end user device and controllable with an end user device.

In another more limited aspect, a combination of the modular side shroud assembly as described herein and any one or more of a central network controller configured for one or both of controlling and communicating with the accessory device, the helmet accessory mount system, a helmet mount assembly configured to be attached to a front shroud assembly associated with the helmet, and a human viewable display is provided.

In another more limited aspect, the human viewable display is a head up display (HUD).

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is a fragmentary, right side view of a helmet having a side shroud assembly in accordance with an exemplary embodiment of the present invention with an exemplary accessory module attached.
FIG. 2 is an isometric view of the shroud assembly appearing in FIG. 1.
FIG. 3 is a partially exploded isometric view of the shroud assembly appearing in FIG. 1.
FIG. 4 is a side view of the shroud assembly appearing in FIG. 1 with the accessory module removed.
FIG. 5 is a cross-sectional view taken along the lines 5--5 appearing in FIG. 4.
FIG. 6 is a partially exploded isometric view of the shroud assembly appearing in FIG. 1.
FIG. 7 is an enlarged right side view of the modular interface base panel.
FIG. 8 is a cross-sectional view taken along the lines 8--8 appearing in FIG. 7.
FIG. 9 is an enlarged right side view of an exemplary accessory module engaging the modular interface base panel.
FIG. 10 is a cross-sectional taken along the lines 10--10 appearing in FIG. 9.
FIG. 11 is an enlarged bottom view of the exemplary accessory module appearing in FIGS. 9 and 10.
FIG. 12 is an enlarged left side view of the exemplary accessory module appearing in FIGS. 9-11.
FIG. 13 illustrates an exemplary helmet having a second side shroud assembly which is operable with the presently disclosed side shroud assembly with modular interface.
FIG. 14 illustrates an exemplary network controller operable to control an accessory module coupled to the shroud modular interface.
FIG. 15 illustrates an exemplary head up display (HUD) operable to receive human-viewable output related to the accessory module interface.

### DETAILED DESCRIPTION OF THE PREFERRED EMBODIMENT(S)

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention cover such modifications and variations as come within the scope of the appended claims and their equivalents.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected.

As used in this application, the terms "front," "rear," "upper," "lower," "upwardly," "downwardly," "left," "right," and other orientation descriptors are intended to facilitate the description of the exemplary embodiment(s) of the present invention and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

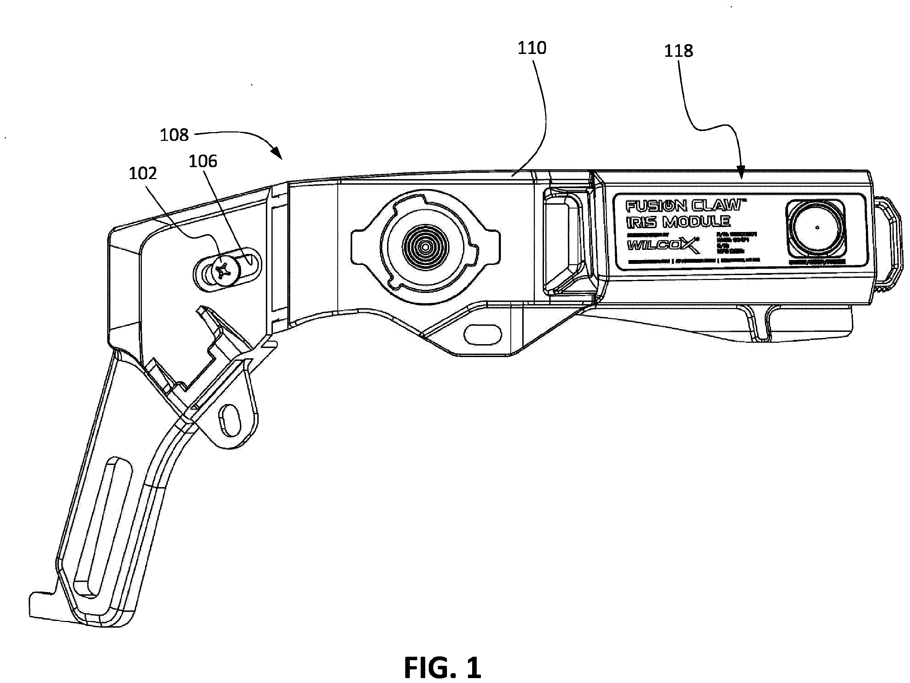

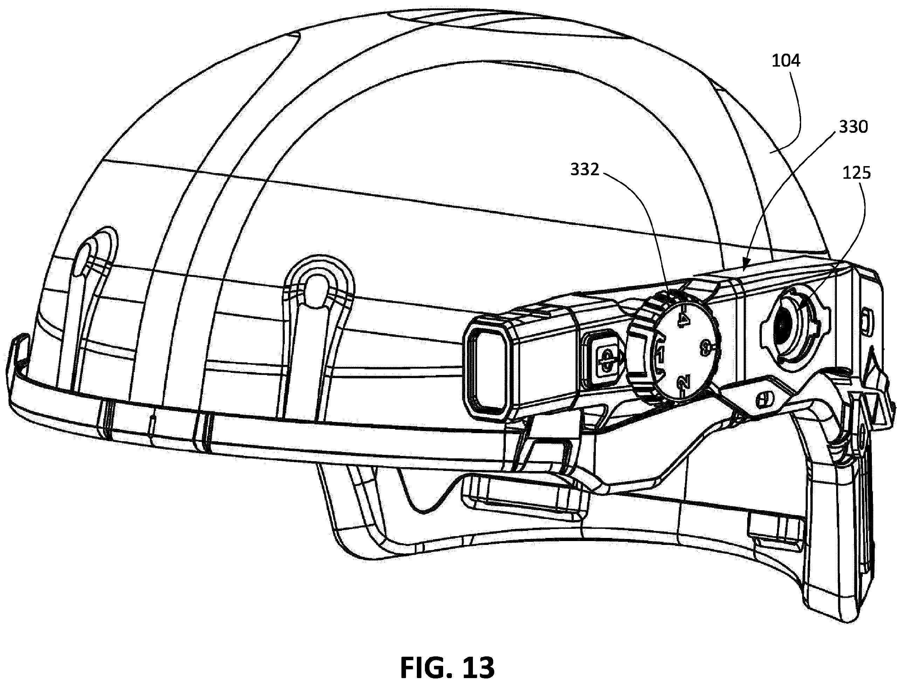

Referring now to the drawings, wherein like reference numerals refer to like or analogous components throughout the several views, FIG. 1 depicts a side accessory mounting shroud assembly **108** which is attachable to a helmet **104** (see FIG. 13). In embodiments, the shroud assembly **108** is configured as a right-side shroud assembly. The shroud assembly **108** is coupled to the helmet **104** via a threaded fastener **102** passing through a clearance opening **106** in a housing **110** of the shroud assembly **108,** which engages an aligned threaded or tapped opening or insert (not shown) in the helmet **104.** While the depicted preferred embodiment illustrates a right-side shroud assembly **108,** it is to be understood that a left-side configuration is also contemplated, wherein the left-side embodiment is mirror-reversed but otherwise corresponds in structure and function to the shroud assembly **108** as herein described.

In embodiments, the right side shroud assembly **108** is used in combination with the left side shroud assembly as described in commonly owned U.S. provisional application no. 63/621,230 filed January 16, 2024, and U.S. nonprovisional application no. 18/954,745 filed November 21, 2024, the entire contents of each of which are incorporated herein by reference. Again, it will be recognized that in alternative embodiments, the right side shroud assembly **108** as described herein may be configured as a left side shroud assembly and the left side shroud assembly as illustrated in the aforementioned application nos. 63/621,230 and 18/954,745 could be configured as a right side shroud assembly.

The shroud assembly **108** has a main housing **110.** The helmet **104** may be a military helmet, ballistic helmet, field helmet, tactical helmet, combat helmet, aviation helmet, among others. In embodiments, the side shroud assembly **108** is a component or connection point of a larger helmet accessory mount platform **115.** In embodiments, the shroud assembly **108** is a component or connection point of a helmet accessory mount platform as shown and described in commonly owned U.S. patent application no. 18/500,657 filed November 2, 2023, and U.S. provisional patent application no. 63/427,496 filed November 23, 2022. In embodiments, the shroud assembly **108** is a component of a helmet accessory mount platform which is a WILCOX^{®} Universal Helmet Mount Assembly (UHMA).

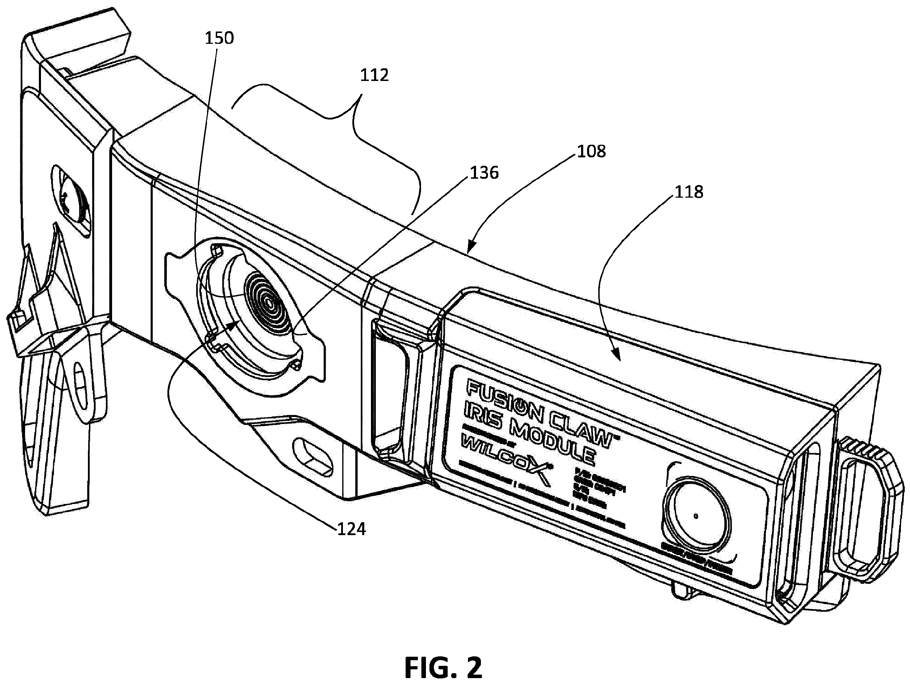

Referring now to FIG. 2, and with continued reference to FIG. 1, the shroud assembly **108** includes a headset interface **112** including a headset interface socket **124** for detachably coupling a communications headset or earpiece assembly having a complementary interface plug (not shown). In the illustrated embodiment, the headset interface **112** includes a bayonet (align-and-rotate) type connector plate or collar **136** for providing a detachable mechanical connection to a headset. A plurality of electrical contacts **150** (concentric annular, e.g., circular, contacts in the illustrated embodiment) provide an audio interface between an associated headset and the shroud assembly **108,** as well as transmitting electrical power, data signals, power negotiation signals, data negotiation signals, and so forth.

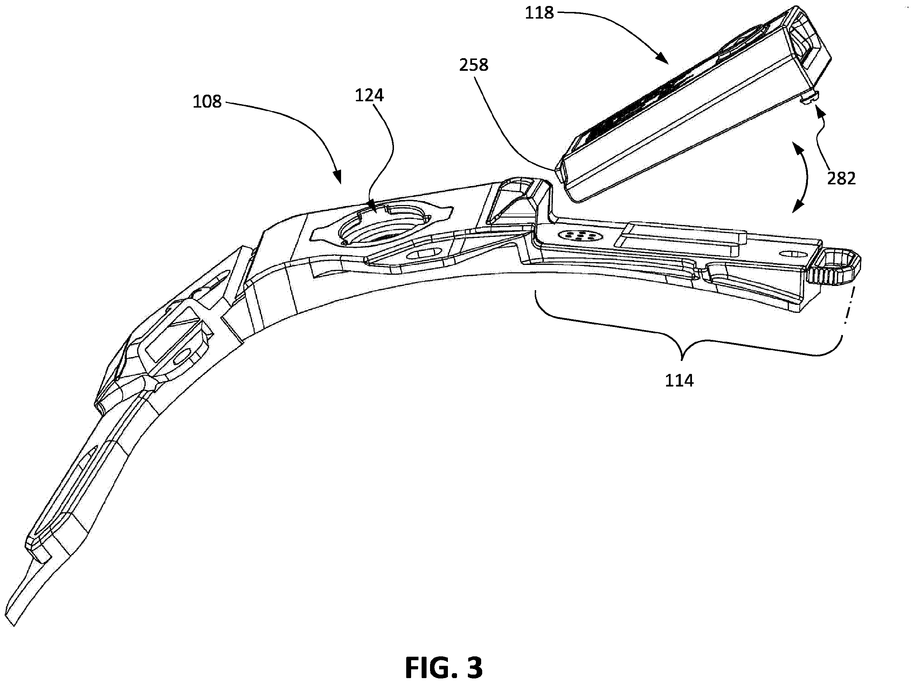

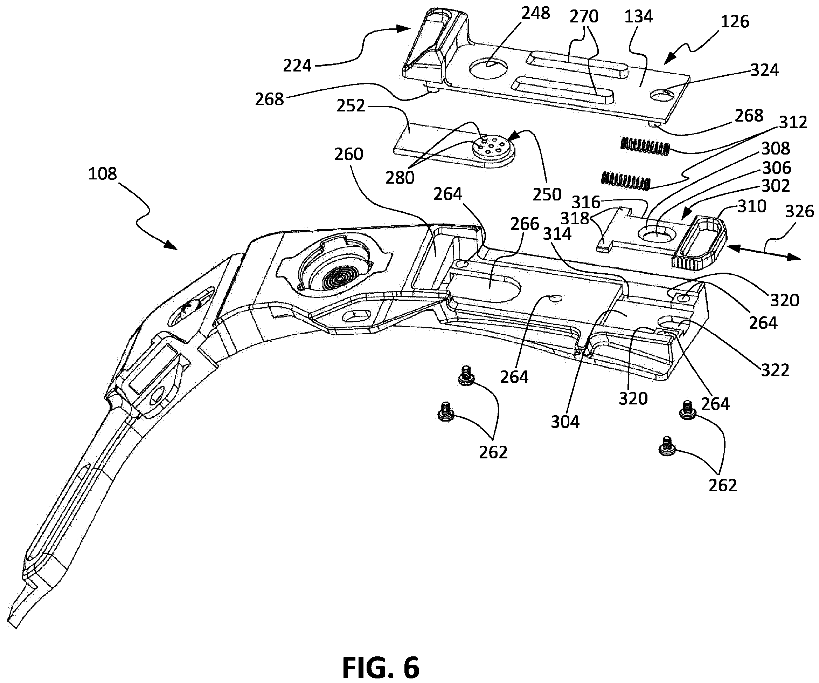

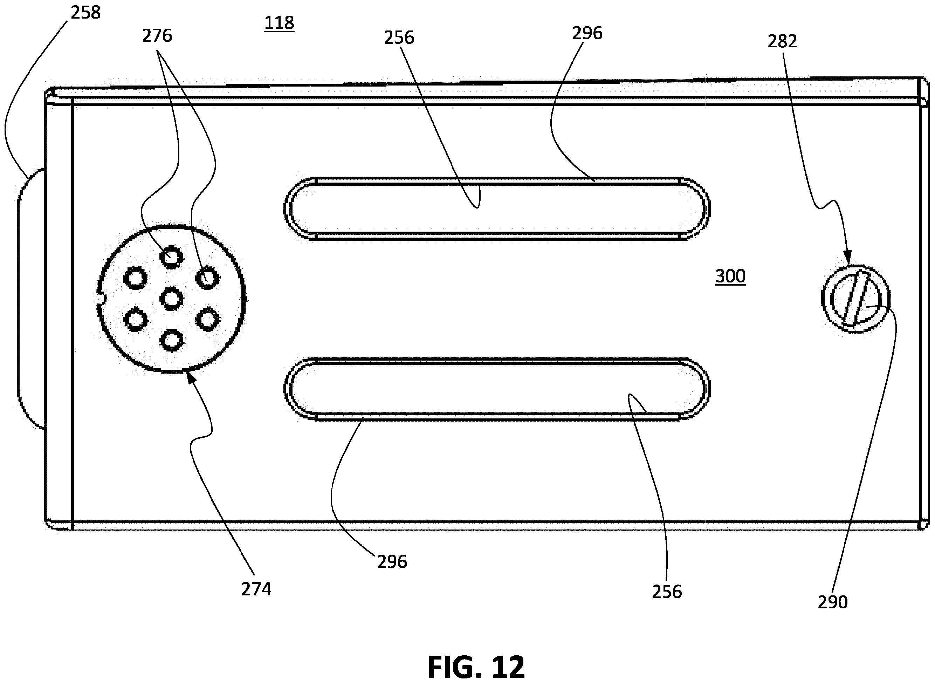

Referring now to FIG. 3, and with continued reference to FIGS. 1 and 2, the shroud assembly **108** includes a modular interface portion **114** for detachably and operably coupling an accessory device module **118.** In the illustrated embodiment, the accessory device module **118** includes a user depressible push button **120** for controlling operation or one or more functions of the accessory device module **118.** In the illustrated embodiment, the module **118** is a combat recording camera system having a record button **120** to start and stop recording and internal electronic memory, such as flash memory, SD card, or the like. In embodiments, the camera system includes a lens assembly to capture video footage and a sensor array (e.g., a charge-coupled device (CCD) array or a complementary metal-oxide-semiconductor (CMOS) array) for converting incoming light into electrical signals representative of the video image. In alternative embodiments, the combat recording camera system functions as a digital video recorder (DVR) for recording and storing video data received from a camera module in communication with the shroud assembly **108** and located elsewhere on the helmet mounting system and in communication with the shroud assembly **108** or other external video feed. Power, data, and control signals are passed to and from the unit **118** via a connector **250** (see FIG. 6) within the interface portion **114** and an electrical connector interface **274** (see FIG. 12) on the unit **118.**

Other exemplary modular accessory devices **118** include, but are not limited to, cameras, thermal cameras, light detection and ranging (LiDAR) scanners, directional antenna, range finder, laser designator, infrared (IR) illuminator, flashlight, a sensor or suite or sensors, including but not limited to, barometer, accelerometer, gyroscope, magnetometer, satellite-based positioning receiver (e.g., a Global Positioning System (GPS) receiver), temperature sensor, light sensor, microphone, and the like, two-way radio, music player, a controller or actuator (e.g., button pad or keypad) for controlling one or more other accessory devices or peripherals on the helmet or otherwise coupled to the helmet system, a self-defense module such as a lachrymator canister module (e.g., tear gas, MACE(TM), pepper spray, or other irritant), conducted electrical weapon (CEW) (e.g., TASER(TM)), or a gun/firearm/projectile weapon module. Exemplary modular accessories are described in commonly owned U.S. Patent No. 11,419,382 issued August 23, 2022, the entire contents of which are incorporated herein by reference. In embodiments, alternative exemplary accessory modules **118** may be as shown and described by way of reference to FIGS. 28-35 in the aforementioned U.S. Patent No. 11,419,382.

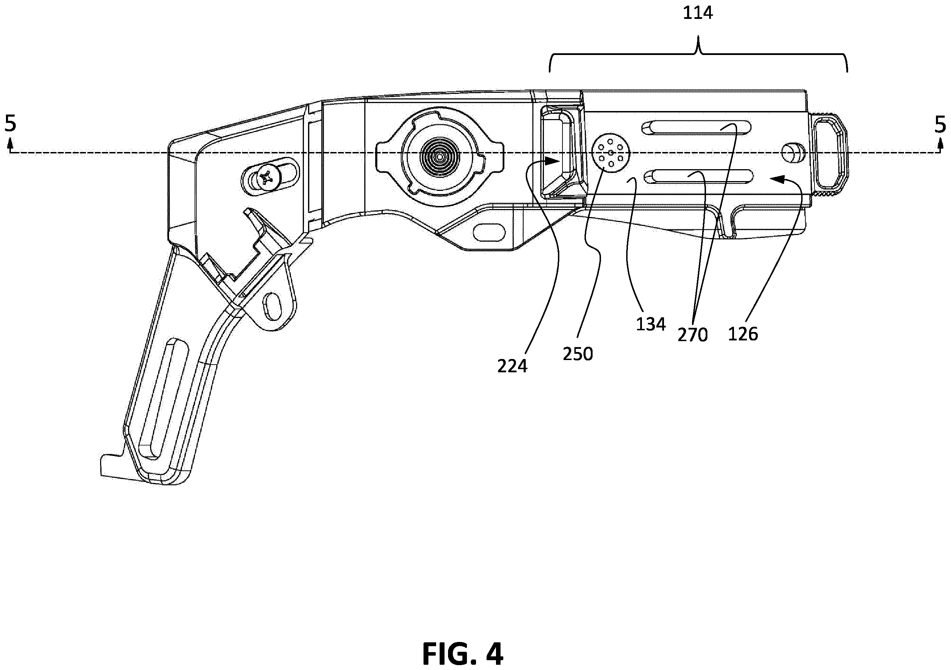

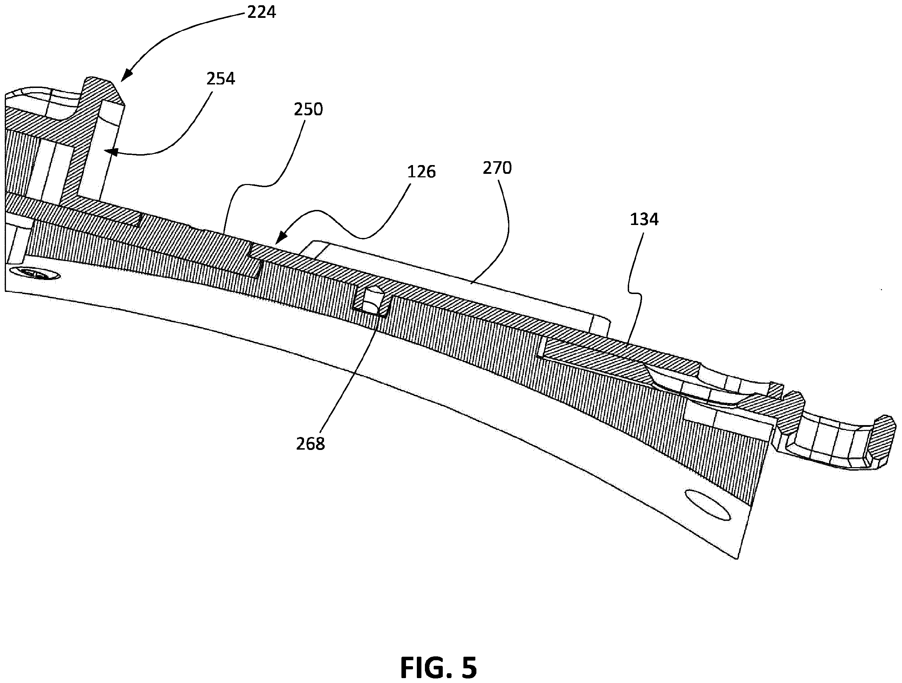

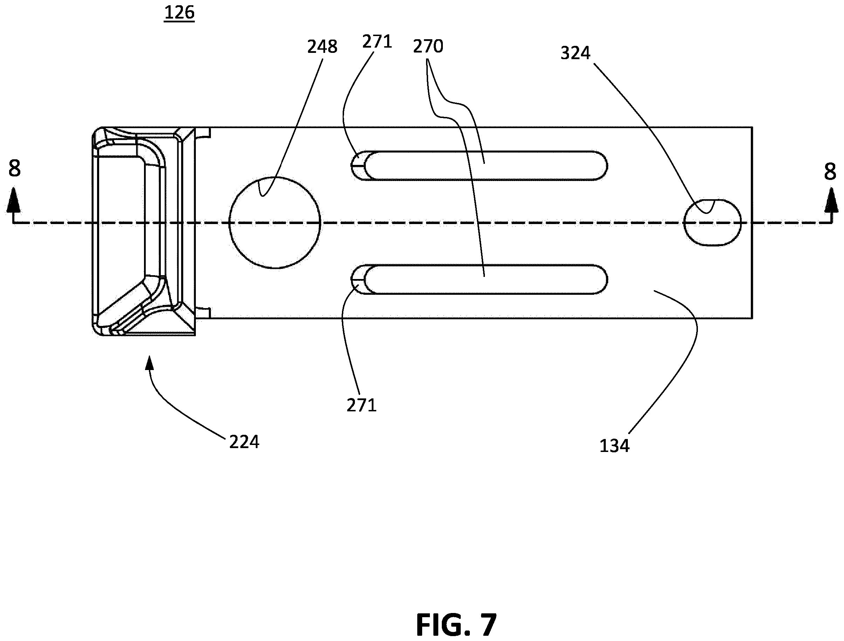

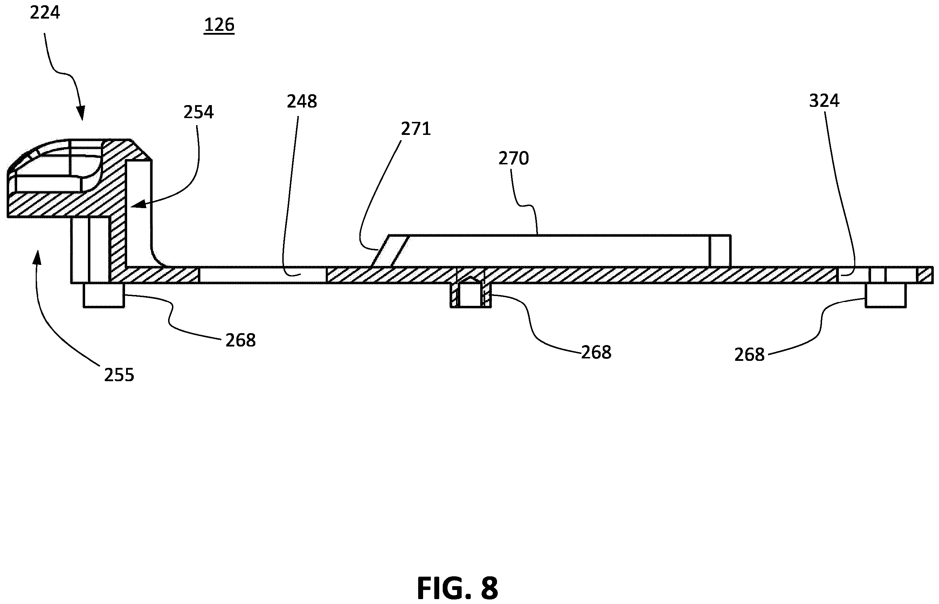

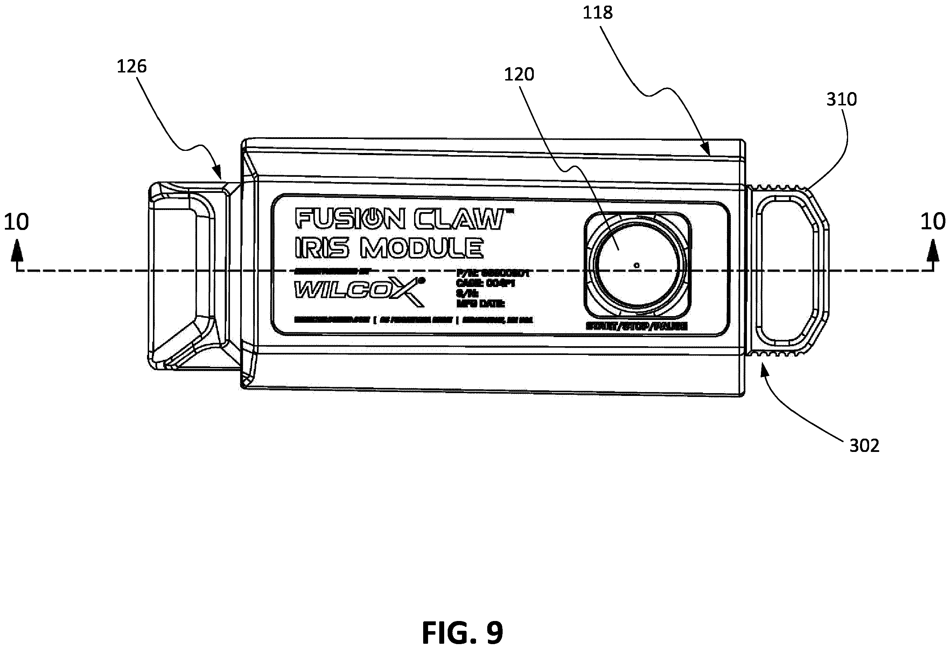

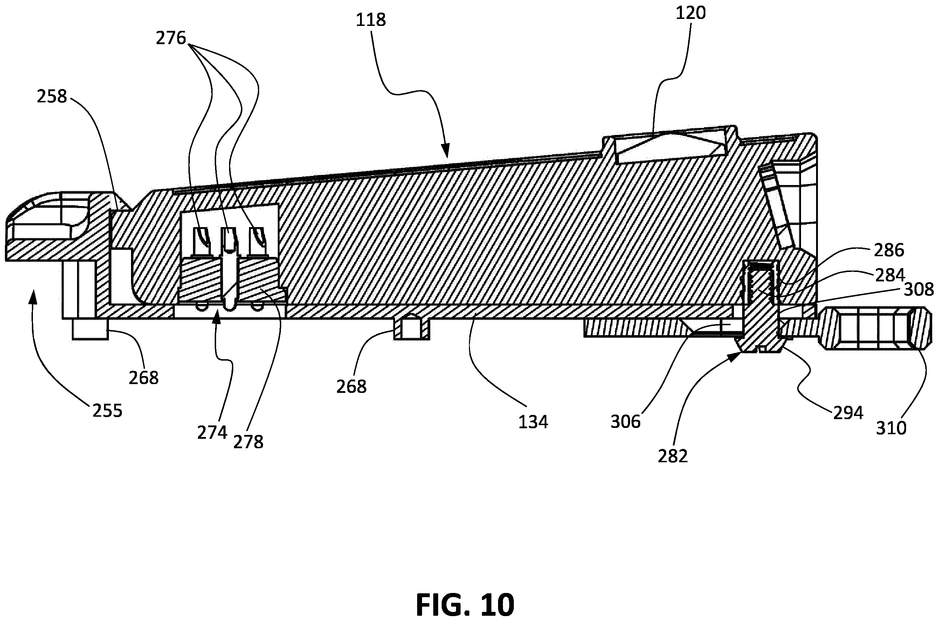

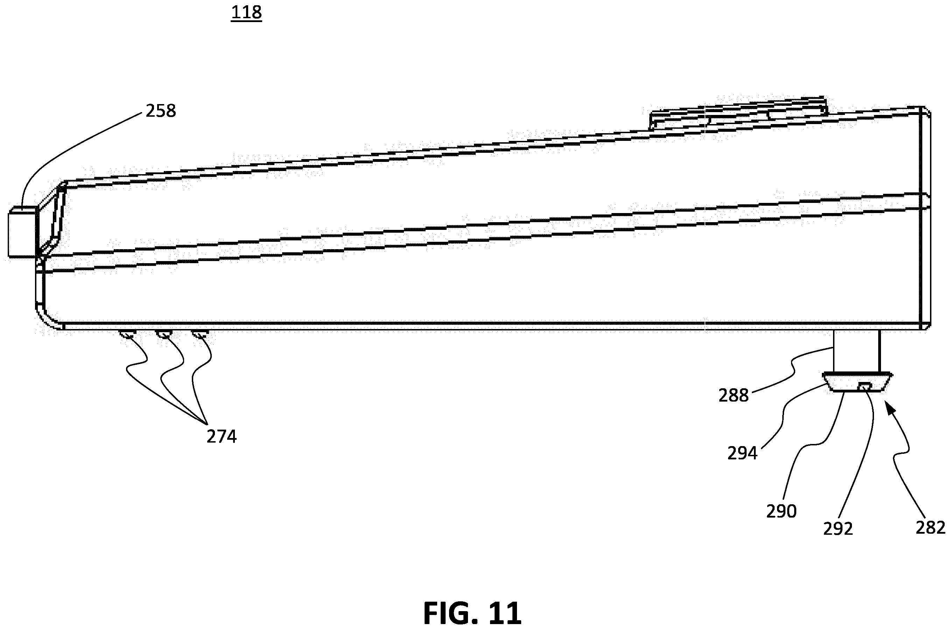

Referring now to FIGS. 4-12, and with continued reference to FIGS. 1-3, the modular interface portion **114** includes a base panel **126** having a base plate portion **134** and an upstanding raised edge portion **224.** The base panel **126** may be formed of any suitable materials, including a metal, polymer, or composite material. In embodiments, the base panel **126** is formed of aluminum. In embodiments, all critical ICD dimensions are hosted on the base panel **126.** In this manner, the base panel **126** includes all the necessary physical and functional features such as connector placements, mounting points, alignment surfaces, etc., that comply with the specifications outlined in the ICD such that developers can design modular devices which are compatible the platform.

In the illustrated embodiment, the base plate **134** includes a first aperture **248** receiving a multi-contact electrical connector **250.** The electrical connector **250** has a plurality of contact pads or terminals **280.** The electrical connector **250** is disposed on a circuit board or substrate **252** in the shroud assembly housing **110,** in the modular interface portion **114.** The circuit board or substrate **252** with electrical connector **250** is disposed within a complementary recess **266** formed in the housing **110** within the modular interface portion **114.**

The raised edge portion **224** includes a recess **254** in a first side thereof and a cutout **255,** such as a channel or groove. The recess **254** is configured to receive a tab or tongue **258** disposed at a proximal end of the accessory module **118.** The cutout 255 is configured to engage a complementary shoulder **260** formed on the housing **110.** A plurality of threaded fasteners **262** pass through respective aligned clearance openings **264** in the housing **110** and threadably engage an aligned one of a plurality of mounting bosses **268** formed on the base plate **134.** A plurality of elongate, protruding ribs **270** are formed on the base plate **134** and engage complementary recesses or channels **256** formed on the mating surface **300** of the accessory module **118.** The ribs **270** and channels **256** serve as alignment features to ensure proper alignment of the accessory module **118** within the modular interface portion **114.** In embodiments, a clearance bevel **271** is formed on the inner edge of the rib **270** to accommodate rotational insertion of the accessory module **118** into the shroud assembly modular interface portion **114,** as described below. It will be recognized that alignment features having other shapes and geometries may be used to provide the desired alignment.

The electrical interface **274** is disposed on the surface of the accessory module **118** which opposes the base plate **134.** The electrical interface **274** includes conductive pins **276** which serve as electrical pathways for transmitting control signals, power, and data between the accessory module **118** and the shroud assembly **108.** In embodiments, the pins **276** are spring-loaded pins, e.g., pogo pins. The pins **276** are arranged or embedded within an insulator **278** which provides electrical isolation between the pins **276.** The insulator **278** is formed of an insulating material, such as a thermoset or thermoplastic resin, or other suitable dielectric material. The pins **266** are arranged in a pattern or layout which corresponds with the pattern or layout of the contact pads or terminals on the connector **250** within the interface portion **114** of the shroud assembly **108.**

The modular interface portion **114** further includes a quick release latching assembly for detachably securing the modular accessory **118** in place in the shroud assembly **108.** As noted above, the first attachment point for securing the accessory module **118** is the recess **254** which receives the tongue **258.** A second point of attachment between the accessory module **118** and the shroud assembly **108** is a latched key **282** which is rigidly secured to the accessory module **118.** In the illustrated embodiment, the latched key **282** includes a threaded end **284** which threadably engages an opening **286,** such as a tapped opening, threaded insert nut, or the like, within the accessory module **118.**

The latched key **282** also includes a reduced diameter post **288** which extends from the housing of the accessory module **118.** An enlarged diameter head **290** is disposed at the distal end of the reduced diameter post **288.** In embodiments, a tool engaging feature **292,** such as a slot, hex recess, Torx (star) recess, Phillips head (cross) recess, or the like, is provided to facilitate securing the latched key **282** to the accessory module **118.** In embodiments, the enlarged diameter head **290** has a beveled and/or rounded edge **294** to facilitate insertion into the latch assembly on the modular interface portion **114.**

In certain embodiments, the edges of the channels **256** have a beveled, chamfered, and/or rounded over peripheral edge **296** to facilitate alignment during engagement with the ribs **270.** In operation, the bevel, chamfer, or round over **296** provides a slightly enlarged entrance to the channel **256,** permitting some degree of initial misalignment between the ribs **270** and the channels **256** such that incline, ramp, or rounding of the edge guides the ribs **270** into their respective channels **256** during the engagement process.

As best seen in FIG. 6, a quick release latch assembly for detachably securing the accessory module **118** within the modular interface portion **114** includes a sliding plate **302** slidably disposed on a recessed surface **304** formed in the housing **110** within the modular interface portion **114.** An opening **306** is formed in the sliding plate **302.** The opening **306** is elongated in the axial direction indicated by the arrow **326** appearing in FIG. 6. The upper edge of the opening **306** has a bevel, chamber, or round over **308.** A release handle **310** protrudes beyond the housing **110** to allow for manual release of the latch mechanism by the user for removing an attached accessory module **118.**

Axially extending spring elements **312** are received within channels **314** disposed on opposite sides of the recessed surface **304** and respective notches **316** formed on opposing sides of the sliding plate **302.** Arms **318** extend transversely at the end of the sliding plate **302.** For each spring element **312,** one end bears against a surface **320** within the housing **110** and the other end bears against a respective one of the arms **318.** The spring elements **312** bear against the arms **318** to bias the sliding plate **302** into the locked or latched axial position.

A central recess **322** is formed in the surface **304.** The recess **322** is aligned with a second opening **324** in the base plate **134.** The second opening is slightly elongated in the axial direction to accommodate rotational insertion of the accessory module **118** into the shroud assembly modular interface portion **114,** as described below. The opening **306** in the sliding plate **302** is urged out of alignment with the opening **324** and the recess **322** in the sliding or axial direction as indicated by the arrow **326.**

In operation, when attaching an accessory module **118** to the shroud assembly interface portion **114,** the tongue **258** is first inserted into the receptacle **254** in the raised edge portion **224.** Thereafter, the distal end of the accessory module **118** is pivoted or rotated down, as shown by the arrow **328** appearing in FIG. 3. As the distal end of the accessory module **118** is pivoted or rotated down, the latched key **282** enters the opening **324** in the plate **134.** In embodiments, the opening **324** is elongated in the axial direction a sufficient distance to provide a margin or clearance to accommodate the rotational path of the latched key **282** as it enters the opening **324.**

When the head portion **290** of the latched key **282** enters the opening **324,** the inclined surface **294** of the head **290** engages the inclined surface **308** of the non-aligned opening **306.** As the inclined surfaces **294** and **308** undergo relative motion, the wedging action causes the sliding plate **302** to be translated in the axial direction against the biasing force of the spring elements **312** to bring the opening **306** into axial alignment with the opening **324** and the recess **322.** When the opening **306** is sufficiently axially aligned with the opening **324** and the recess **322,** the enlarged diameter head **390** is able to move past the opening **306** and enter the recess **322** in the base of the modular interface portion **114.** The bias of the spring elements **312** then urges the sliding plate **302** back into the latched position, where the edge of the opening **306** engages with the reduced diameter post **288** to trap the enlarged diameter head **290** in place within the recess **322.** Once in the latched position, the sliding plate **302,** under the influence of the spring elements **312,** firmly holds the latched key **282** in place to ensure secure and stable retention of the accessory module **118** within the interface portion **114** until it is intentionally released.

To remove the accessory module **118** from the interface portion **114,** the handle **310** is manually pulled in the axial direction, against the bias of the spring elements **312.** This action releases the enlarged diameter head **294,** allowing it to move out of the recess **322** through the opening **306.** Upon releasing the latched key **282,** the tongue **258** is disengaged from the recess **254** and the spring elements **312** urge the sliding plate **302** to its original position.

Because the shroud assembly **108** utilizes a modular quick disconnect interface **114** with a common electrical interface **250** that allows various types of modules to be connected and allows a common end user device (EUD) (not shown), such as a mobile device, to program and/or control the modules, a system can be provided having a plurality or family of interchangeable modules.

In embodiments, a controller or actuator on one component coupled to the overall helmet accessory system **115** can be used to control or actuate an accessory device or peripheral on another component coupled elsewhere to the overall helmet accessory system **115.** By way of nonlimiting example, as shown in FIG. 13, the side shroud assembly **108** can be used with a second side shroud assembly **330** disposed on the opposite side of the helmet **104.** In embodiments, the two side shroud assemblies **108** and **330** communicate via a common network or bus, such as a rear bridge component (not shown) disposed at the rear of the helmet **104,** which rear bridge component may be a component of the helmet accessory mounting platform **115.**

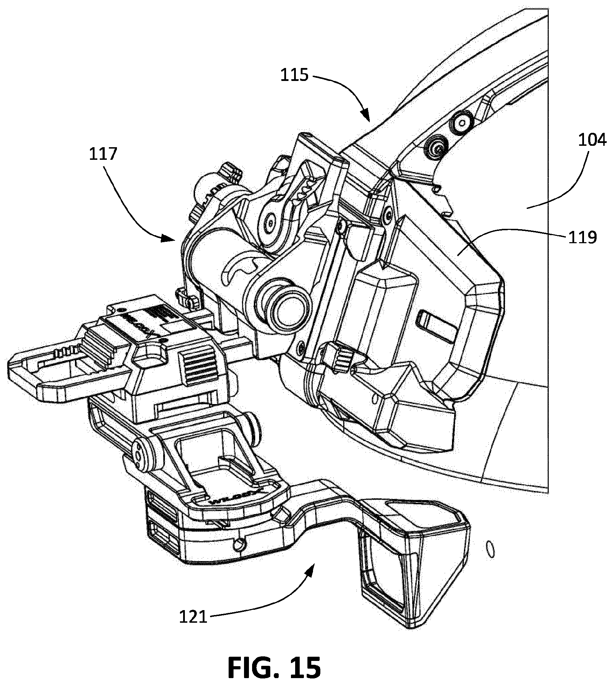

In the embodiment illustrated in FIG. 13, the second side shroud assembly **330** includes a rotary switch **332** having 4 rotary positions, although other types of switches and actuators are contemplated, such as keypads, button pads, and so forth. In operation, the rotary switch **332** on the on the second shroud assembly **330** can be preprogrammed using the EUD to control the accessory module **118** attached to the side shroud assembly **108.** For example, the illustrated module **118** could be replaced with a self-defense module which has a chemical irritant (e.g., tear gas) canister and the rotary switch **332** could be programmed by the end user, e.g., via the EUD to activate the chemical irritant canister on the shroud assembly **108** by rotating the rotary switch **332** to position 3. It will be recognized that the foregoing example is presented for illustrative purposes only, and it should be understood that various modifications, alternatives, and other configurations may be employed. In embodiments, the second side shroud assembly also has an audio interface **125** for detachably coupling a headset assembly (not shown). By using the first and second side shrouds **108** and **330** together, binaural headset functionality is provided by the platform **115** (see FIG. 15).

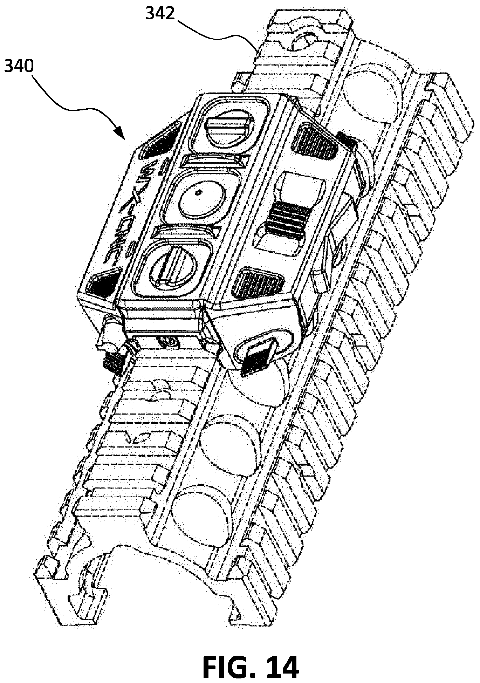

FIG. 14 illustrates a central network controller **340,** which is depicted as being attached to a handguard or rail interface **342** of a weapon. It will be recognized that the central network controller could be mounted elsewhere, such as on the helmet or could be worn by the user, e.g., on a garment, vest, backpack, or other equipment worn by the user. In embodiments, the central network controller **340** is coupled (via wired or wireless connection) to the helmet accessory mounting platform **115** (see FIG. 15), which provides an additional means for controlling an accessory module **118** attached to the mounting interface **114.** In embodiments, the central network controller **340** functions as a central hub for controlling and communicating with other accessory devices associated with the helmet accessory mounting platform **115.** In certain embodiments, the central network controller **340** is as described in commonly owned U.S. patent application no. 18/381,937 filed October 19, 2023, entitled "Central Network Controller for Weapon Accessory Devices," the entire contents of which are incorporated herein by reference.

In embodiments, each accessory component or attachment is configured to be manually controlled or, alternatively or additionally, controlled by preprogrammed instructions. In embodiments, the program instructions are stored within a memory unit associated with a processing unit embedded within the central network controller **340.** In certain embodiments, an advanced artificial intelligence (AI) system is provided to govern the execution of such program instructions. In embodiments, the use of AI-driven program automation provides an increased adaptability, responsiveness, and intelligent decision-making capabilities.

Referring now to FIG. 15, there is shown a helmet **104** having the accessory mount platform **115.** A helmet mount assembly **117** is secured to a front shroud assembly **119,** which defines a front connection interface of the platform **115,** which may additionally include the side shrouds **108, 330,** as well as a rear interface bracket or bridge (not shown) for bridging the shrouds **119, 108,** and **330** together. A head up display (HUD) assembly **121** is coupled to the helmet mount assembly **117** and positionable in front of an eye of a user. The HUD assembly **121** is configured to display pertinent information or indicia in human-viewable form, including without limitation, information or indicia pertinent to attached accessories or peripherals coupled to the platform **115,** including the accessory module **118** or other accessory interchangeably attached in its place. The HUD assembly **121** may be as shown and described in commonly owned U.S. provisional application no. 63/623,303 filed January 21, 2024, the entire contents of which are incorporated herein by reference.

Exemplary types of information or indicia that can be displayed includes details associated with the one or more attached devices, including but not limited to, the name, type, and/or function the device, real-time information pertaining to the operational status or the device, including without limitation confirmation of proper attachment device, its readiness for use, relevant diagnostic information, among others.

It will be recognized that the display is not limited to a HUD or near eye display as shown in FIG. 15 and that, alternatively or additionally, similar information can be displayed on one or more other display types, such as a display screen of a weapon system, a display screen of a smartphone or other mobile device that is coupled to or paired with (e.g., via Bluetooth or other RF interface) the accessory mount platform **115,** a display screen of a smartwatch, smart glasses, or other wearable technology, or an embedded display within a vision device such as an enhanced night vision goggle-binocular (ENVG-B), thermal camera (e.g., thermal sight), short-wave infrared (SWIR) camera (e.g., SWIR sight), optical scopes and sights, and so forth. In certain embodiments, information pertaining to the accessory module **118** or other attached accessory is output to eyewear having a wireless near eye display such as shown and described in commonly owned U.S. Patent No. 11,808,537 issued November 7, 2023, the entire contents of which are incorporated herein by reference.

The invention has been described with reference to the preferred embodiment(s). Modifications and alterations will occur to others upon a reading and understanding of the preceding detailed description. It is intended that the invention be construed as including all such modifications and alterations insofar as they come within the scope of the appended claims.

## Claims

1. A modular side shroud assembly for a helmet mounting system associated with a helmet, the modular side shroud assembly comprising:
a main housing configured to be detachably mounted to a side portion of the helmet, the main housing having a rear end positioned toward a rear portion of the helmet when mounted and a forward end positioned toward a front portion of the helmet when mounted;
shroud circuitry disposed within the main housing, the shroud circuitry configured for electrical coupling to the helmet mounting system when mounted; and
a modular interface portion disposed on the forward end of the housing, the modular interface being configured in accordance with an associated interface control document (ICD) to detachably couple an accessory device that conforms to the ICD to the modular side shroud assembly and electrically couple the accessory device to the shroud circuitry.

2. The modular side shroud assembly of claim 1, wherein the modular interface is configured to interchangeably couple a plurality of modular and interchangeable accessory devices to the modular side shroud assembly, wherein the modular side shroud assembly comprises an electrical connector disposed within the modular interface portion for electrically coupling the plurality of modular and interchangeable accessory devices to the shroud circuitry.

3. The modular side shroud assembly of claim 1 or claim 2, wherein the modular interface portion comprises:
a base panel having a base plate portion and an upstanding raised edge portion, wherein one or more physical and functional features defined by the ICD are defined by the base panel;
the base plate including a first aperture receiving an electrical connector electrically coupled to the shroud circuitry;
the base plate including a raised edge portion defining a recess on a first side thereof and cutout defined on a second side thereof opposite the first side;
the recess configured to receive a tab or tongue disposed at a proximal end of the accessory module; and
the cutout configured to engage a complementary shoulder formed on the main housing.

4. The modular side shroud assembly of claim 3, wherein the base plate is secured to the main housing via a plurality of threaded fasteners passing through respective aligned clearance openings in the main housing and threadably engaging respective aligned mounting bosses formed on the base plate.

5. The modular side shroud assembly of claim 3 or claim 4, wherein the base plate includes one or more ribs configured to engage respective one or more recesses formed on a mating surface of the accessory module, the one or more ribs and one or more recesses configured to serve as alignment features to ensure proper alignment of the accessory module within the modular interface portion when the accessory module is attached.

6. The modular side shroud assembly of claim 5, further comprising a clearance bevel formed on each of the one or more ribs, the clearance bevel configured to accommodate rotational insertion of the accessory module into the modular interface portion.

7. The modular side shroud assembly of any of claims 3-6, further comprising an electrical interface disposed within a first opening formed in the base plate.

8. The modular side shroud assembly of any of claims 3-7, further comprising a quick release latching assembly for detachably securing the modular accessory to the modular interface portion.

9. The modular side shroud assembly of claim 8, wherein the quick release latching assembly comprises:
a sliding plate slidably disposed intermediate the base plate and a recessed surface formed in the main housing within the modular interface portion, the sliding plate slidable in an axial direction;
an opening formed in the sliding plate;
a release handle coupled to the sliding plate and protruding beyond the main housing to allow for manual release of the latching assembly by the user for removing the accessory module when the accessory module is attached;
one or more spring elements received within a corresponding one or more channels disposed within the recessed surface and within a respective one or more notches formed on the sliding plate, the one or more notches defining a respective one or more arms extending in a transverse direction;
the one or more spring elements each having one end bearing against a surface within the housing and another end bearing against a respective one of the one or more arms to bias the sliding plate toward a latched axial position;
a central recess formed in the recessed surface and aligned with a second opening formed in the base plate;
wherein the one or more spring members are configured to urge the second opening in the sliding plate out of alignment with the first opening and the central recess; and
wherein the sliding plate is manually slidable to bring the second opening in the sliding plate into alignment with the first opening and the central recess.

10. The modular side shroud assembly of claim 8 or claim 9, wherein the quick release latching assembly comprises:
a latched key rigidly secured to the accessory module;
the latched key including a threaded end which threadably engages a complementary opening within the accessory module and a post which extends from a housing of the accessory module; and
an enlarged diameter head disposed at a distal end of the post.

11. The modular side shroud assembly of claim 10, wherein the enlarged diameter head includes a tool-engaging feature.

12. The modular side shroud assembly of claim 10 or claim 11, wherein the enlarged diameter head has a beveled and/or rounded edge.

13. The modular side shroud assembly of any of claims 10-12, wherein the opening in the sliding plate is elongated in the axial direction a sufficient distance to provide a clearance to accommodate a rotational path of the latched key as it enters the opening in the sliding plate.

14. The modular side shroud assembly of any of the preceding claims, wherein the rear end of the housing is configured to operably couple to a rear bridge interface of the helmet mounting system.

15. The modular side shroud assembly of any of the preceding claims, further comprising a headset interface intermediate the rear end and forward end for detachably coupling a communications headset.

16. The modular side shroud assembly of claim 15, wherein the headset interface includes a bayonet mount for detachably coupling the communications headset.

17. The modular side shroud assembly of any of the preceding claims, further comprising a second side shroud assembly in communication with the modular side shroud assembly, the second side shroud assembly comprising:
one or more programmable switches configured to control the accessory module when the accessory module is attached to the modular side shroud assembly.

18. The modular side shroud assembly of any of the preceding claims, further comprising:
a second side shroud assembly in communication with the modular side shroud assembly;
a first headset assembly coupled to the modular side shroud assembly; and
a second headset assembly coupled to the second side shroud assembly, the first and second headset assemblies cooperating to define a binaural headset.

19. The modular side shroud assembly of any of the preceding claims, in combination with the accessory device, wherein the accessory device has user-depressible push button configured to control operation or one or more functions of the accessory device.

20. The combination of claim 19, wherein the accessory device is a video recording system having a manual record button, the video recording system selected from a camera recording system having an integral camera and configured to record a video signal captured by the integral camera and a digital video recorder configured to record a video signal received from an external source selected from the group consisting of an external camera and an external video feed.

21. The combination of claim 19 or claim 20, wherein the accessory device is one or more devices selected from the group consisting of cameras, thermal cameras, light detection and ranging (LiDAR) scanners, directional antennas, range finders, laser designators, infrared (IR) illuminators, flashlights, sensors, sensor suites, barometers, accelerometers, gyroscopes, magnetometers, satellite-based positioning receivers, temperature sensors, light sensors, microphones, two-way radios, music players, controllers, actuators, button pads, keypads, self-defense modules, lachrymator canister modules, conducted electrical weapon modules, and projectile weapon modules.

22. The combination of any of claims 19-21, wherein the accessory device is configured to be one or both of programmable with an end user device and controllable with an end user device.

23. The modular side shroud assembly of any of the preceding claims, in combination with any one or more of:
a central network controller configured for one or both of controlling and communicating with the accessory device;
the helmet accessory mount system;
a helmet mount assembly configured to be attached to a front shroud assembly associated with the helmet; and
a human viewable display.

24. The combination of claim 23, wherein the human viewable display is a head up display (HUD).
